# EUROPEAN PATENT SPECIFICATION

(11) **EP 3 320 282 B1**
(45) Date of publication and mention of the grant of the patent: **11.11.2020**
(21) Application number: 16738998.0
(22) Date of filing: 07.07.2016
(51) Int. Cl.: F25D 21/12, B60H 1/32, F25D 29/00

(54) **TRANSPORT REFRIGERATION UNIT**
TRANSPORTKÜHLEINHEIT
UNITÉ DE RÉFRIGÉRATION DE TRANSPORT

(30) Priority: 07.07.2015 US 201562189374 P
(43) Date of publication of application: 16.05.2018
(73) Proprietor: Carrier Corporation, Farmington, Connecticut 06032 (US)
(72) Inventor: SWAB, Michael, Athens, Georgia 30601 (US)
(74) Representative: Dehns
(86) International application number: PCT/US2016/041254
(87) International publication number: WO 2017/007882

(56) References cited:
- WO-A1-2013/043389
- JP-A- 2008 221 997
- US-A- 3 367 131
- US-A- 4 850 197

## Description

The present disclosure relates to transport refrigeration units and, more particularly, to evaporator defrosting and associated control logic.

Traditional refrigerated cargo trucks or refrigerated tractor trailers, such as those utilized to transport cargo via sea, rail, or road, is a truck, trailer or cargo container, generally defining a cargo compartment, and modified to include a refrigeration system located at one end of the truck, trailer, or cargo container. Refrigeration systems typically include a compressor, a condenser, an expansion valve, and an evaporator serially connected by refrigerant lines in a closed refrigerant circuit in accord with known refrigerant vapor compression cycles. A power unit, such as a combustion engine, drives the compressor of the refrigeration unit, and may be diesel powered, natural gas powered, or other type of engine. In many tractor trailer transport refrigeration systems, the compressor is driven by the engine shaft either through a belt drive or by a mechanical shaft-to-shaft link. In other systems, the engine drives a generator that generates electrical power, which in-turn drives the compressor.

Evaporators of the refrigeration units are used during the refrigeration process to maintain appropriate temperatures within the cargo compartment. During the cooling cycle, humidity in the air within the cargo compartment may collect on the evaporator in the form of ice. Continued buildup of ice reduces the evaporator efficiency, thus a defrost cycle may be initiated by the unit to remove the ice. Manufacturers and operators of fleets of refrigerated trucks, trailers and/or cargo containers desire to maximize operational efficiency of the entire operation cycle(s) of the refrigeration system. One area of improvement may be made with respect to the defrosting capability of the refrigeration system.

WO 2013/043389 A1 discloses a transport refrigeration system utilising engine waste heat.

US 3 367 131 A discloses conducting hot exhaust gases for defrosting a refrigeration unit.

US 4 850 197 A discloses a method and apparatus for enhancing the heating and defrost cycles of refrigeration systems.

Document JP2008221997 discloses a defrost cycle for an outdoor heat exchanger in a vehicle while using waste heat of an internal combustion engine.

### SUMMARY

The present invention is disclosed in the independent claims 1 and 14. Further embodiments are disclosed in the dependent claims.

Additionally to the foregoing embodiment, the transport refrigeration unit includes a supply conduit for flowing the engine coolant in the heated state from the combustion engine to the defrost heat exchanger, and a return conduit for flowing the engine coolant in a cooled state from the defrost heat exchanger to the combustion engine system.

In the alternative or additionally thereto, in the foregoing embodiment, the unit includes a pump constructed and arranged to flow the engine coolant in the supply and return conduits.

In the alternative or additionally thereto, in the foregoing embodiment, the unit includes a first valve constructed and arranged to control flow in the supply and return conduits.

In the alternative or additionally thereto, in the foregoing embodiment, the unit includes a pump disposed in the supply conduit for flowing the engine coolant to the defrost heat exchanger; and an isolation valve disposed in the return conduit.

In the alternative or additionally thereto, in the foregoing embodiment, the unit includes an engine heat exchanger for cooling the engine coolant; and a second valve for controlling flow through the engine heat exchanger.

In the alternative or additionally thereto, in the foregoing embodiment, the unit includes an evaporator fan constructed and arranged to flow air through the defrost heat exchanger and the evaporator, and wherein the defrost heat exchanger is disposed below the evaporator.

In the alternative or additionally thereto, in the foregoing embodiment, the pump is an electric pump.

In the alternative or additionally thereto, in the foregoing embodiment, the unit includes an air pressure differential transducer configured to measure ice buildup on the evaporator.

In the alternative or additionally thereto, in the foregoing embodiment, the unit includes an electronic controller in electrical communication with the air pressure differential transducer, and wherein the controller is configured to initiate a plurality of cooling cycles, determine a build-up of ice on the evaporator after each cooling cycle via at least the air pressure differential transducer, and initiate a defrost cycle accordingly regardless of whether the dedicated combustion engine system is running.

In the alternative or additionally thereto, in the foregoing embodiment, the evaporator, the defrost heat exchanger and the evaporator fan are in a cargo compartment.

In the alternative or additionally thereto, in the foregoing embodiment, the internal combustion engine system includes an internal combustion engine, a heat exchanger and an engine pump for flowing the engine coolant through the engine heat exchanger at least when the transport refrigeration unit is not in a defrost cycle.

In the alternative or additionally thereto, in the foregoing embodiment, the unit includes a defrost pump for flowing engine coolant through the defrost heat exchanger at least when the internal combustion engine is not running.

Additionally to the foregoing embodiments, a method of operating a transport refrigeration unit according to the independent claim 14 further includes running a cooling cycle; and running the combustion engine during at least the cooling cycle, and heating the engine coolant via conduction from the running combustion engine.

The foregoing features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a side view of a tractor trailer system having a transport refrigeration unit as one, non-limiting, exemplary embodiment of the present disclosure;
FIG. 2 is a schematic of the transport refrigeration unit;
FIG. 3 is a schematic of the transport refrigeration unit; and
FIG. 4 is a flow chart of a method of operation of the transport refrigeration unit, which is an example not being part of the present invention.

### DETAILED DESCRIPTION

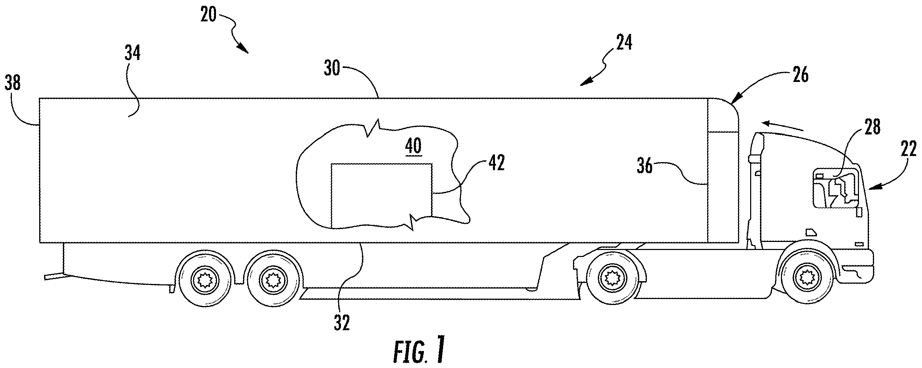

Referring to FIG. 1, one, non-limiting, embodiment of a tractor trailer system 20 of the present disclosure is illustrated. The tractor trailer system 20 includes a tractor 22, a trailer 24 and a transport refrigeration unit 26. The tractor 22 may include an operator's compartment or cab 28 and an engine (not shown) which is part of the powertrain or drive system of the tractor 22. The trailer 24 may be coupled to the tractor 22 and is thus pulled or propelled to desired destinations. The trailer may include a top wall 30, a bottom wall 32 opposed to and space from the top wall 30, two side walls 34 space from and opposed to one-another, and opposing front and rear walls 36, 38 with the front wall 36 being closest to the tractor 22. The trailer 24 may further include doors (not shown) at the rear wall 38, or any other wall. The walls 30, 32, 34, 36, 38 together define the boundaries of a cargo compartment 40.

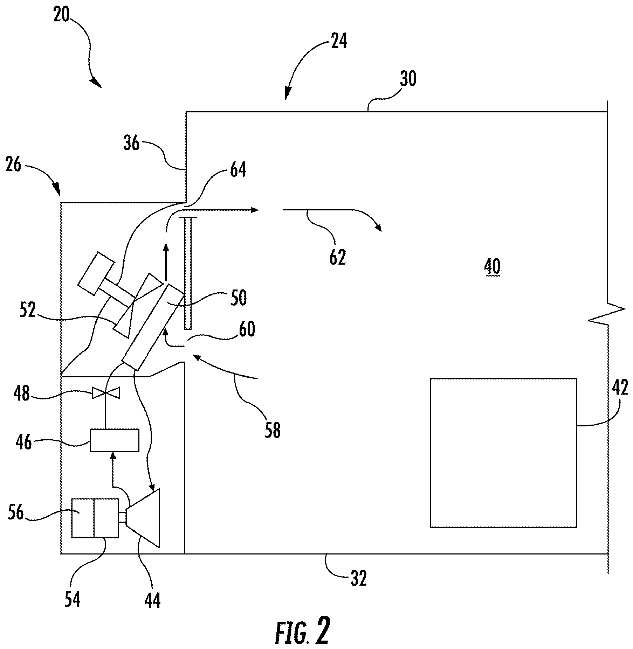

Referring to FIGS. 1 and 2, the trailer 24 is generally constructed to store a cargo 42 in the compartment 40. The refrigeration unit 26 is generally integrated into the trailer 24 and may be near the front wall 36. The cargo 42 is maintained at a desired temperature by cooling of the compartment 40 via the refrigeration unit 26 that circulates airflow into and through the cargo compartment 40 of the trailer 24. The refrigeration unit 26 includes a compressor 44, a condenser 46, an expansion valve 48, an evaporator 50, and an evaporator fan 52. The compressor 44 is powered by an electrical generator 54 driven by an engine system 56.

During a cooling cycle of the refrigeration unit 26, a return airflow 58 flows into the refrigeration unit 26 from the cargo compartment 40 of the trailer 24 through a refrigeration unit inlet 60, and across the evaporator 50 via the evaporator fan 52, thus cooling the return airflow 58. Once cooled, the return airflow 58 becomes supply airflow 62 and is supplied to the cargo compartment 40 through an outlet 64 of the unit 26. The outlet 64 may be located near the top wall 30 and is generally spaced above the inlet 60.

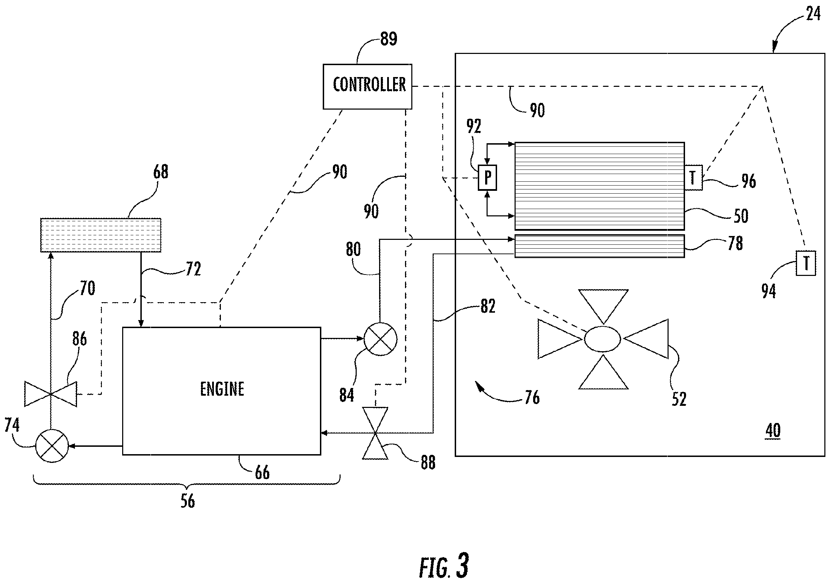

Referring to FIG. 3, the engine system 56 may include an internal combustion engine 66, an engine coolant heat exchanger 68, coolant supply and return conduits 70, 72, and an engine driven coolant pump 74 that may be generally located in the supply conduit 70. During operation, engine coolant in a heated state flows from the engine 66, through the supply conduit 70 (via the pump 74), through the heat exchanger 68 where the coolant is cooled into a cooled state, and back to the engine 66 via the return conduit 72.

The refrigeration unit 26 includes a defrost system 76 that is capable of defrosting the evaporator 50 whether the combustion engine 66 is running or not. When the combustion engine 66 is not running, the defrost system 76 utilizes the residual heat in the coolant and any residual heat produced by the cooling engine block to defrost the evaporator 50. The defrost system 76 includes a defrost heat exchanger 78 generally positioned between the evaporator fan 52 and the evaporator 50, supply and return conduits 80, 82 for flowing diverted engine coolant, a coolant pump 84 that may be electric, a first isolation valve 86 in the supply conduit 70 of the engine system 56 (i.e., downstream of the pump 74), and a second isolation valve 88 in the return conduit 82 of the evaporator system 76. It is further contemplated and understood that coolant tubes (not shown) of the defrost heat exchanger 78 may be interlaced in the evaporator 50.

When the transport configuration unit 26 calls for a defrost cycle, and with the internal combustion engine 66 running, which is an example not being part of the present invention, the defrost system 76 is configured to reposition the isolation valve 86 from about an open position to a closed position, reposition the isolation valve 88 from a closed position to an open position, and initiate operation of the electric pump 84. The engine coolant in the hot state may then flows through the supply conduit 80, through the defrost heat exchanger 78, and back to the engine 66 via the return conduit 82 in the cooled state. If the refrigeration system 26 calls for shutdown of engine 66 during the defrost cycle, residual heat from the engine and in the coolant may still flow via the electric pump 84 and through the defrost heat exchanger 78 to continue the defrost cycle. According to the present invention, the defrost cycle is initiated if the necessity for it is determined without the engine running, and uses any residual heat from a past run time of the engine 66 to defrost the evaporator 50. The system 76 may be further configured to initiate operation of the engine 66 (e.g., idle) if the defrost cycle is not yet complete and any residual heat in the coolant becomes ineffective, and/or temperature within the cargo compartment 40 requires an increase in temperature.

The defrost system 76 of the transport refrigeration unit 26 includes an electronic controller 89, various wired and/or wireless signal paths 90, a differential pressure transducer 92 and two temperature sensors 94, 96. In operation, the controller initiates electric signals to the various components to initiate the defrost system operation described above. More specifically, the controller 89 may utilize an electric signal from the differential pressure transducer 92 that measures an air pressure differential across the evaporator 50 with the evaporator fan 52 running. This pressure differential is an indicator of the buildup of ice on the evaporator (i.e., the higher the pressure differential the greater is the ice buildup). Such pressure differential measurements may be processed by the controller 89 toward a predicted end of a defrost cycle. When taken, the controller 89 may automatically determine when the defrost cycle should be prolonged or terminated if complete. The controller 89 may further utilize temperature signals from the temperature sensor 94 configured to measure cargo compartment air temperature, and temperature signals from the temperatures sensor 96 configured to measure the temperature of air flowing through the evaporator. The sensed temperature and differential values stored by the controller 89 may be compared to a pre-programmed bit map of calibrated values to ascertain the amount of ice buildup on the evaporator 50.

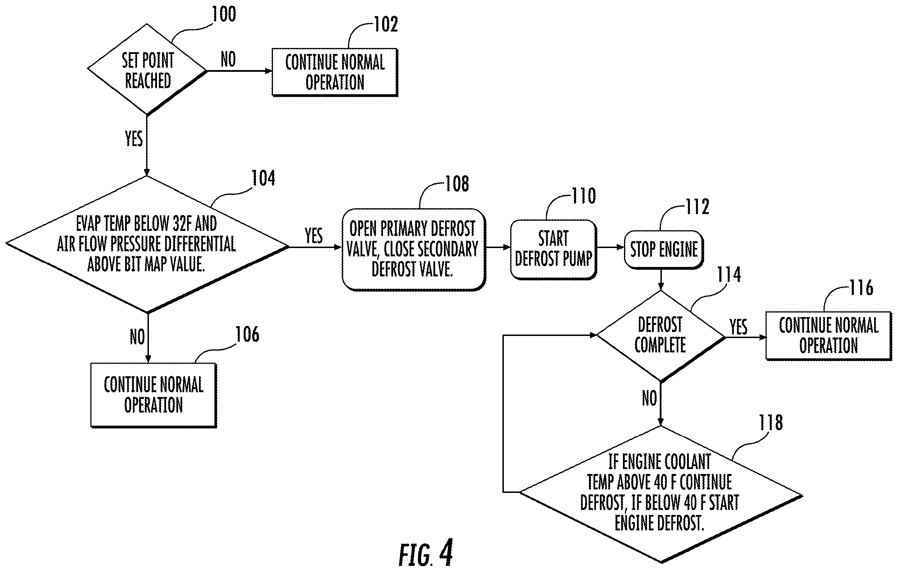

Referring to FIG. 4, one example of a control logic of the defrost system 76 is illustrated, this example is not part of the present invention. Within this logic, the controller 89 as step 100 establishes whether or not a set point is reached. This set point may be a temperature value of the cargo compartment 40 sensed by the temperature sensor 94. As a condition 102 and if the set point is not reached, the refrigeration unit 26 may continue normal operation (i.e., cooling the compartment) if the set point is reached, the controller moves to step 104. Step 104 is a determination by the controller 89 of whether an evaporator temperature has fallen below a preset value (e.g. about thirty-two degrees Fahrenheit (0°C)) as measured by temperature sensor 96 and whether an air flow pressure differential across the evaporator is above a preestablished bit map value. As condition 106 and if no to either value, the unit 26 continues normal operation. As step 108 and if yes to both values/conditions set forth in step 104, then the controller 89 may open valve 88 and close valve 86. As step 110, the controller 88 may then start pump 84; and, as step 112, the controller may stop engine 66, which is an example not being part of the present invention. With the engine 66 not running and the unit 26 is in the defrost cycle, the controller 88 as step 114 may then determine if the defrost cycle is completed utilizing a similar sequence of events described above. As a condition 116 and if the defrost cycle is complete, the refrigeration unit 26 reconfigures itself and continues with the normal cooling cycle. As step 118 and if the defrost cycle is not complete and the coolant temperature is above a set point (e.g., above forty degrees Fahrenheit (4.4°C)) then the defrost cycle continues as configured. If the coolant temperature is below a prescribed set point, then the controller 88 may start the engine 66 to add heat to the process.

The defrost system 76 when compared to more traditional systems, enables less engine run time for defrost and less unnecessary/excessive defrost heat introduced into the cargo compartment 40. The improved ice removal from the evaporator 50 improves the cooling efficiency of the transport refrigeration unit 26.

It is further contemplated and understood that numerous other valve and pump configurations may be established to utilize residual heat from the engine 66 as part of a defrost process. For example, if engine pump 74 is an electric pump, pump 84 may not be required with the proper valving arrangement. Moreover, with a single pump, valves 86, 88 may be replaced with a single diverter valve. It is also contemplated that one or both valves may be control valves and the coolant flow may be split between heat exchangers 68, 78 as required by the unit 26.

The present disclosure is thus not limited to the particular examples disclosed herein, but includes all embodiments falling within the scope of the appended claims.

## Claims

1. A transport refrigeration unit (26) comprising:
a dedicated combustion engine system (66) configured to dissipate residual heat when shut-down;
an evaporator (50); an electronic controller (89) configured to initialize a defrost cycle when it determines its necessity and the combustion engine system (66) is shut-down and
a defrost heat exchanger (78) configured to flow engine coolant in a heated state for defrosting the evaporator (50) when the dedicated combustion engine system (66) is shut-down and the controller (89) determines the necessity of a defrost cycle.

2. The transport refrigeration unit (26) set forth in claim 1 further comprising: a supply conduit (80) for flowing the engine coolant in the heated state from the combustion engine to the defrost heat exchanger (78), and a return conduit (82) for flowing the engine coolant in a cooled state from the defrost heat exchanger (78) to the combustion engine system (66).

3. The transport refrigeration unit (26) set forth in claim 2 further comprising: a pump (84) constructed and arranged to flow the engine coolant in the supply and return conduits, and wherein the pump (84) is independent of the dedicated combustion engine.

4. The transport refrigeration unit (26) set forth in claim 2 further comprising: a first valve constructed and arranged to control flow in the supply and return conduits.

5. The transport refrigeration unit (26) set forth in claim 2 further comprising:
a pump (84) disposed in the supply conduit for flowing the engine coolant to the defrost heat exchanger (78); and
an isolation valve (88) disposed in the return conduit.

6. The transport refrigeration unit (26) set forth in claim 4 further comprising:
an engine heat exchanger for cooling the engine coolant; and
a second valve for controlling flow through the engine heat exchanger.

7. The transport refrigeration unit (26) set forth in claim 1 further comprising: an evaporator fan (52) constructed and arranged to flow air through the defrost heat exchanger (78) and the evaporator (50), and wherein the defrost heat exchanger (78) is disposed below the evaporator (50).

8. The transport refrigeration unit (26) set forth in claim 5, wherein the pump (84) is an electric pump.

9. The transport refrigeration unit (26) set forth in claim 7 further comprising: an air pressure differential transducer configured to measure ice buildup on the evaporator (50).

10. The transport refrigeration unit (26) set forth in claim 9 further comprising: the electronic controller (89) being in electrical communication with the air pressure differential transducer, and wherein the controller (89) is configured to initiate a plurality of cooling cycles, determine a build-up of ice on the evaporator (50) after each cooling cycle via at least the air pressure differential transducer, and initiate a defrost cycle accordingly regardless of whether the dedicated combustion engine system (66) is running.

11. The transport refrigeration unit (26) set forth in claim 7, wherein the evaporator (50), the defrost heat exchanger (78) and the evaporator fan are in a cargo compartment (40).

12. The transport refrigeration unit (26) set forth in claim 1, wherein the dedicated combustion engine system (66) includes an internal combustion engine, a heat exchanger and an engine pump for flowing the engine coolant through the engine heat exchanger at least when the transport refrigeration unit (26) is not in a defrost cycle.

13. The transport refrigeration unit (26) set forth in claim 12 further comprising: a defrost pump (84) for flowing engine coolant through the defrost heat exchanger (78) at least when the internal combustion engine is not running.

14. A method of operating a transport refrigeration unit (26) according to claim 1 comprising:
initializing a defrost cycle when the controller (89) determines its necessity and the combustion engine of the unit is not running;
conducting residual heat from the dedicated combustion engine system (66) to the engine coolant; and
flowing engine coolant in a heated state through a defrost heat exchanger (78) for defrosting the evaporator (50).

15. The method set forth in claim 14 further comprising:
running a cooling cycle; and
running the combustion engine of the transport refrigeration unit (26) during at least the cooling cycle; and
heating the engine coolant via conduction from the running combustion engine.

## Patentansprüche

1. Transportkühleinheit (26), umfassend:
ein zweckbestimmtes Brennkraftmaschinensystem (66), welches konfiguriert ist, Restwärme abzuführen, wenn es abgeschaltet wird;
einen Verdampfer (50);
eine elektronische Steuereinheit (89), welche konfiguriert ist, einen Entfrosterzyklus zu initialisieren, wenn sie dessen Notwendigkeit bestimmt und das Brennkraftmaschinensystem (66) abgeschaltet ist, und
einen Entfroster-Wärmetauscher (78), welcher konfiguriert ist, Motorkühlflüssigkeit in einem erwärmten Zustand zum Entfrosten des Verdampfers (50) zu strömen, wenn das zweckbestimmte Brennkraftmaschinensystem (66) abgeschaltet ist und die Steuereinheit (89) die Notwendigkeit eines Entfrosterzyklus bestimmt.

2. Transportkühleinheit (26) nach Anspruch 1, weiter umfassend:
eine Versorgungsleitung (80) zum Strömen der Motorkühlflüssigkeit in dem erwärmten Zustand von der Brennkraftmaschine zu dem Entfroster-Wärmetauscher (78), und einen Rückleitung (82) zum Strömen der Motorkühlflüssigkeit in einem gekühlten Zustand von dem Entfroster-Wärmetauscher (78) zu dem Brennkraftmaschinensystem (66).

3. Transportkühleinheit (26) nach Anspruch 2, weiter umfassend:
eine Pumpe (84), welche konstruiert und angeordnet ist, um die Motorkühlflüssigkeit in den Versorgungs- und Rückleitungen zu strömen, und wobei die Pumpe (84) unabhängig von der zweckbestimmten Brennkraftmaschine ist.

4. Transportkühleinheit (26) nach Anspruch 2, weiter umfassend:
ein erstes Ventil, welches konstruiert und angeordnet ist, um Strömung in den Versorgungs- und Rückleitungen zu steuern.

5. Transportkühleinheit (26) nach Anspruch 2, weiter umfassend:
eine Pumpe (84), welche sich in der Versorgungsleitung befindet, zum Strömen der Motorkühlflüssigkeit zu dem Entfroster-Wärmetauscher (78); und
ein Absperrventil (88), welches sich in der Rückleitung befindet.

6. Transportkühleinheit (26) nach Anspruch 4, weiter umfassend:
einen Motor-Wärmetauscher zum Kühlen der Motorkühlflüssigkeit; und
ein zweites Ventil zum Steuern von Strömung durch den Motor-Wärmetauscher.

7. Transportkühleinheit (26) nach Anspruch 1, weiter umfassend:
einen Verdampferlüfter (52), welcher konstruiert und angeordnet ist, um Luft durch den Entfroster-Wärmetauscher (78) und den Verdampfer (50) zu strömen, und wobei der Entfroster-Wärmetauscher (78) sich unter dem Verdampfer (50) befindet.

8. Transportkühleinheit (26) nach Anspruch 5, wobei die Pumpe (84) eine elektrische Pumpe ist.

9. Transportkühleinheit (26) nach Anspruch 7, weiter umfassend:
einen Luftdruckdifferentialumwandler, welcher konfiguriert ist, um Eisbildung auf dem Verdampfer (50) zu messen.

10. Transportkühleinheit (26) nach Anspruch 9, weiter umfassend:
die elektronische Steuereinheit (89) in elektrischer Kommunikation mit dem Luftdruckdifferentialumwandler, und wobei die Steuereinheit (89) konfiguriert ist, um eine Vielzahl von Kühlzyklen zu initiieren, eine Bildung von Eis auf dem Verdampfer (50) nach jedem Kühlzyklus über zumindest den Luftdruckdifferentialumwandler zu bestimmen, und entsprechend einen Entfrosterzyklus zu initiieren, unabhängig davon, ob das zweckbestimmte Brennkraftmaschinensystem (66) läuft.

11. Transportkühleinheit (26) nach Anspruch 7, wobei der Verdampfer (50), der Entfroster-Wärmetauscher (78) und der Verdampferlüfter in einem Frachtraum (40) sind.

12. Transportkühleinheit (26) nach Anspruch 1, wobei das zweckbestimmte Brennkraftmaschinensystem (66) eine interne Brennkraftmaschine, einen Wärmetauscher und eine Motorpumpe zum Strömen der Motorkühlflüssigkeit durch den Motor-Wärmetauscher zumindest, wenn die Transportkühleinheit (26) nicht in einem Entfrosterzyklus ist, beinhaltet.

13. Transportkühleinheit (26) nach Anspruch 12, weiter umfassend:
eine Entfrosterpumpe (84) zum Strömen von Motorkühlflüssigkeit durch den Entfroster-Wärmetauscher (78) zumindest, wenn die interne Brennkraftmaschine nicht läuft.

14. Verfahren zum Betreiben einer Transportkühleinheit (26) nach Anspruch 1, umfassend:
Initialisieren eines Entfrosterzyklus, wenn die Steuereinheit (89) dessen Notwendigkeit bestimmt und die Brennkraftmaschine der Einheit nicht läuft;
Ableiten von Restwärme von dem zweckbestimmten Brennkraftmaschinensystem (66) zu der Motorkühlflüssigkeit; und
Strömen von Motorkühlflüssigkeit in einem erwärmten Zustand durch einen Entfroster-Wärmetauscher (78) zum Entfrosten des Verdampfers (50).

15. Verfahren nach Anspruch 14, weiter umfassend:
Starten eines Kühlzyklus; und
Starten der Brennkraftmaschine der Transportkühleinheit (26) während zumindest des Kühlzyklus; und
Erwärmen der Motorkühlflüssigkeit über Ableitung von der laufenden Brennkraftmaschine.

## Revendications

1. Unité de réfrigération de transport (26) comprenant :
un système de moteur à combustion dédié (66) configuré pour dissiper une chaleur résiduelle lorsqu'il est coupé ;
un évaporateur (50) ;
un dispositif de commande électronique (89) configuré pout initialiser un cycle de dégivrage lorsqu'il détermine sa nécessité et que le système de moteur à combustion (66) est coupé et
un échangeur de chaleur de dégivrage (78) configuré pour assurer l'écoulement d'un liquide de refroidissement de moteur dans un état chauffé pour dégivrer l'évaporateur (50) lorsque le système de moteur à combustion dédié (66) est coupé et que le dispositif de commande (89) détermine la nécessité d'un cycle de dégivrage.

2. Unité de réfrigération de transport (26) selon la revendication 1, comprenant en outre :
un conduit d'alimentation (80) pour assurer l'écoulement du liquide de refroidissement de moteur dans l'état chauffé du moteur à combustion à l'échangeur de chaleur de dégivrage (78), et un conduit de retour (82) pour assurer l'écoulement du liquide de refroidissement de moteur dans un état refroidi de l'échangeur de chaleur de dégivrage (78) au système de moteur à combustion (66).

3. Unité de réfrigération de transport (26) selon la revendication 2, comprenant en outre :
une pompe (84) construite et agencée pour assurer l'écoulement du liquide de refroidissement de moteur dans les conduits d'alimentation et de retour, et dans laquelle la pompe (84) est indépendante du moteur à combustion dédié.

4. Unité de réfrigération de transport (26) selon la revendication 2, comprenant en outre :
une première vanne construite et agencée pour commander l'écoulement dans les conduits d'alimentation et de retour.

5. Unité de réfrigération de transport (26) selon la revendication 2, comprenant en outre :
une pompe (84) disposée dans le conduit d'alimentation pour assurer l'écoulement du liquide de refroidissement de moteur vers l'échangeur de chaleur de dégivrage (78) ; et
une vanne d'isolement (88) disposée dans le conduit de retour.

6. Unité de réfrigération de transport (26) selon la revendication 4, comprenant en outre :
un échangeur de chaleur de moteur pour refroidir le liquide de refroidissement de moteur ; et
une seconde vanne pour commander l'écoulement à travers l'échangeur de chaleur de moteur.

7. Unité de réfrigération de transport (26) selon la revendication 1, comprenant en outre :
un ventilateur d'évaporateur (52) construit et agencé pour assurer l'écoulement d'air à travers l'échangeur de chaleur de dégivrage (78) et l'évaporateur (50), et dans laquelle l'échangeur de chaleur de dégivrage (78) est disposé en dessous de l'évaporateur (50).

8. Unité de réfrigération de transport (26) selon la revendication 5, dans laquelle la pompe (84) est une pompe électrique.

9. Unité de réfrigération de transport (26) selon la revendication 7, comprenant en outre :
un capteur de différentiel de pression d'air configuré pour mesurer une accumulation de glace sur l'évaporateur (50).

10. Unité de réfrigération de transport (26) selon la revendication 9, comprenant en outre :
le dispositif de commande électronique (89) en communication électrique avec le capteur de différentiel de pression d'air, et dans laquelle le dispositif de commande (89) est configuré pour lancer une pluralité de cycles de refroidissement, déterminer une accumulation de glace sur l'évaporateur (50) après chaque cycle de refroidissement via au moins le capteur de différentiel de pression d'air, et lancer en conséquence un cycle de dégivrage, que le système de moteur à combustion dédié (66) soit en marche ou pas.

11. Unité de réfrigération de transport (26) selon la revendication 7, dans laquelle l'évaporateur (50), l'échangeur de chaleur de dégivrage (78) et le ventilateur d'évaporateur sont dans un compartiment de cargaison (40).

12. Unité de réfrigération de transport (26) selon la revendication 1, dans laquelle le système de moteur à combustion dédié (66) inclut un moteur à combustion interne, un échangeur de chaleur et une pompe de moteur pour assurer l'écoulement de liquide de refroidissement de moteur à travers l'échangeur de chaleur de moteur au moins lorsque l'unité de réfrigération de transport (26) n'est pas dans un cycle de dégivrage.

13. Unité de réfrigération de transport (26) selon la revendication 12, comprenant en outre :
une pompe de dégivrage (84) pour assurer l'écoulement de liquide de refroidissement de moteur à travers l'échangeur de chaleur de dégivrage (78) au moins lorsque le moteur à combustion interne n'est pas en marche.

14. Procédé de fonctionnement d'une unité de réfrigération de transport (26) selon la revendication 1, comprenant :
un lancement d'un cycle de dégivrage lorsque le dispositif de commande (89) détermine sa nécessité et que le moteur à combustion de l'unité n'est pas en marche ;
une conduction de chaleur résiduelle du système de moteur à combustion dédié (66) vers le liquide de refroidissement de moteur ; et
un écoulement de liquide de refroidissement de moteur dans un état chauffé à travers un échangeur de chaleur de dégivrage (78) pour dégivrer l'évaporateur (50).

15. Procédé selon la revendication 14, comprenant en outre :
un fonctionnement d'un cycle de refroidissement ; et
un fonctionnement du moteur à combustion de l'unité de réfrigération de transport (26) pendant au moins le cycle de refroidissement ; et
un chauffage du liquide de refroidissement de moteur via conduction à partir du moteur à combustion en marche.
